# EUROPEAN PATENT SPECIFICATION

(11) **EP 0 999 084 B1**
(45) Date of publication and mention of the grant of the patent: **31.08.2005**
(21) Application number: 99850163.9
(22) Date of filing: 03.11.1999
(51) Int. Cl.: B60K 20/04, B62D 33/073

(54) **Transmission control device for a vehicle**
Getriebesteuereinrichtung für Fahrzeug
Dispositif de contrôle de transmission pour véhicule

(30) Priority: 04.11.1998 SE 9803764
(43) Date of publication of application: 10.05.2000
(73) Proprietor: VOLVO LASTVAGNAR AB, 405 08 Göteborg (SE)
(72) Inventor: Thoreson, Torsten, 442 53 Kungälv (SE)
(74) Representative: Hellbom, Lars Olof

(56) References cited:
- EP-A- 0 176 682
- EP-A- 0 342 174
- EP-A- 0 464 923
- DE-A- 2 527 407
- DE-A- 19 735 292
- GB-A- 1 374 391
- US-A- 4 269 282

## Description

The present invention concerns a gear-change control system for vehicles with tiltable driver's cab, comprising a gear lever fitted in the cab, which lever moves with the cab during tilting, and which lever, in the vehicle's drive position, is connected to a gearbox fitted in the vehicle via at least one wire.

In order to be able to reach the engine and gearbox in certain types of lorries, the cab is tiltable. The cab can then be tilted about a pivot-joint from a lowered position, i.e. the lorry's drive position, to a tilted position. The location of the pivot joint forms the cab tilt centre, and the pivot joint connects the cab to a frame construction in the lorry. The engine and gearbox are fitted in the frame, while the gear lever is fitted in the cab. When the cab is tilted, the gear lever must be disengaged from the gearbox. In certain types of lorry, the gearbox is not placed directly under the gear lever, in which case a link mechanism is required between the gear lever and the gearbox, which link mechanism transmits movement from the gear lever to the gearbox.

To prevent the transmission of noise and vibration from the gearbox to the gear lever, the connection between the gearbox and the gear lever can be made by wires. Thus, when changing gear, the movements of the gear lever will control the gearbox via these wires. However, the use of wires to connect the gear lever to the gearbox will cause problems when the cab is tilted.

In the case of one known solution, the wires connecting the gear lever to the gearbox are drawn via and around the pivot-joint at the cab tilt centre. This means that the cab can be tilted without fouling the wires. The disadvantage of this known solution is that the wires have to be long, resulting in low efficiency with high gear-change forces, and also a springy feel to the gear change with indistinct gear positions. Since the space around the cab tilt centre is very restricted, there will also be installation problems. In addition, installation of long wires is expensive. It has also been shown that a selected gear can jump out when large relative movements arise between cab and gearbox.

Other known solutions are disclosed in the following documents.

Document EP-A-0 176 682 relates to a mechanical transmission between a gear lever and a gearbox according to the preamble of claim 1. The gear lever is connected to the gearbox via a rocker lever and a transmission bar.

Document EP-A-0 342 174 relates to a gear shift mechanism for tilt cab vehicles. A gear lever is connected to a gearbox via a short angled arm and a shifting rod.

Document US-A-4 269 282 relates to a gear shift control. A gear lever is connected to a gearbox via rod members.

Document DE 25 27 407 A, relates to a gear rod for vehicles with tiltable drivers cab. A gear lever is connected to a gearbox via a gear rod.

Document GB-A-1 374 391 relates to gear shift mechanisms. A gear lever is connected to a gearbox via a gear shift bar.

Document EP-A-0 464 923 relates to a device for adjusting the position of a vehicle gear-shift lever. A gear level is connected to a gearbox via a flexible wire.

The object of the present invention is to achieve a gear-change control system in a vehicle with tiltable cab, where the gear lever and the gearbox are connected by wires, and where the gear-change control system offers high efficiency and distinct gear positions, allowing at the same time large relative movements between the cab and the gearbox.

This is achieved by the use of a gear-change control system according to claim 1.

This type of gear-change control system allows short wires which can be arranged essentially straight, which in turn results in high efficiency, good gear-change feel with distinct gear positions and simple, low-cost installation. With this gear-change control system, cab tilting can be carried out irrespective of gear position, allowing at the same time large relative movements between the cab and the gearbox without the gear position being changed.

The invention will be described in greater detail below, with exemplary embodiments shown in the attached drawings, in which:
Fig. 1: is a sectional rear view of a gear-change control system according to a first exemplary embodiment of the present invention,
Fig. 2: is a sectional side view of the gear-change control system according to Fig. 1,
Fig. 3: is a partially sectioned side view according to Fig. 1, in which a tension-spring arrangement is shown which acts in conjunction with a disengagement device,
Fig. 4: is a sectional view along line IV-IV in Fig. 2, and
Fig. 5: is a sectional side view of a gear-change control system according to a second exemplary embodiment of the present invention.

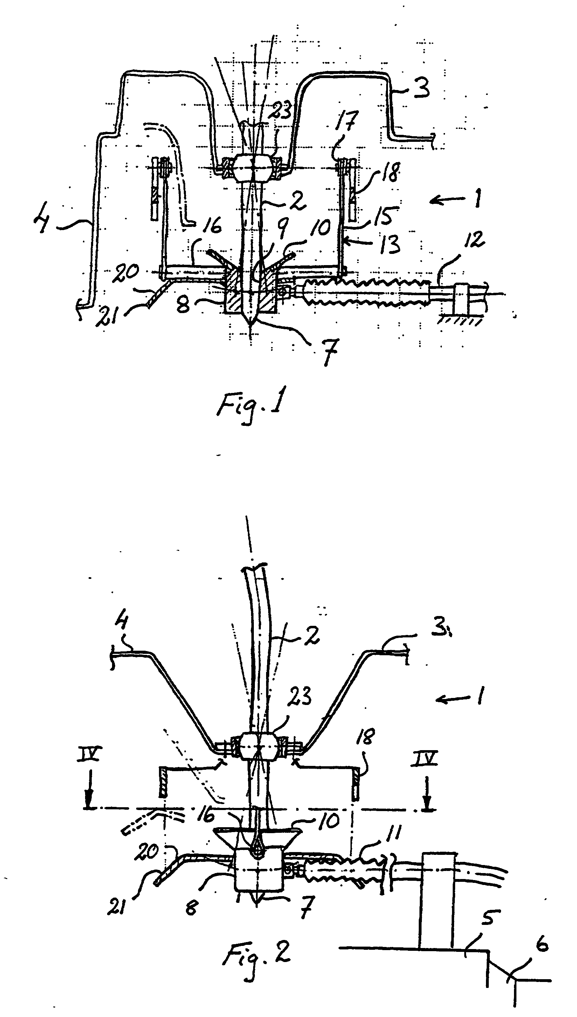

Fig. 1 shows a sectional view of a gear-change control system 1 according to a first exemplary embodiment of the present invention. The control system 1 is viewed from the rear relative to the direction of travel of the vehicle in which the gear-change control system is fitted. The gear-change control system 1 includes a gear lever 2, which is fitted in the floor 3 of a tiltable cab 4. The cab 4 is made tiltable to provide access to the engine 5 and the gearbox 6 (Fig. 2) for repairs and service. The gear lever 2 is, according to the first exemplary embodiment, articulated in the cab 4 by means of a ball joint. Fig. 1 shows how the lower end 7 of the gear lever 2 is connected to the disengagement device 8. The gear lever 2 is inserted into a conical bore 9 in the disengagement device 8. Around the bore 9 is fitted a funnel-shaped guide 10. The gear lever 2 is designed to be disengaged from the disengagement device 8 when the cab 4 is tilted. With the lowering of the cab 4 to the vehicle's drive position, the funnel guide 10 will help to guide the gear lever 2 into the bore 9.

Two wires 11, 12 are connected to the disengagement device 8 (only the one wire 12 is shown in Fig. 1). The wires 11, 12 transmit movement from the gear lever 2 to the gearbox 6. Wire 11 transmits longitudinal force, while the other wire 12 transmits transverse force. The term wire is used here to mean also cable and cable control.

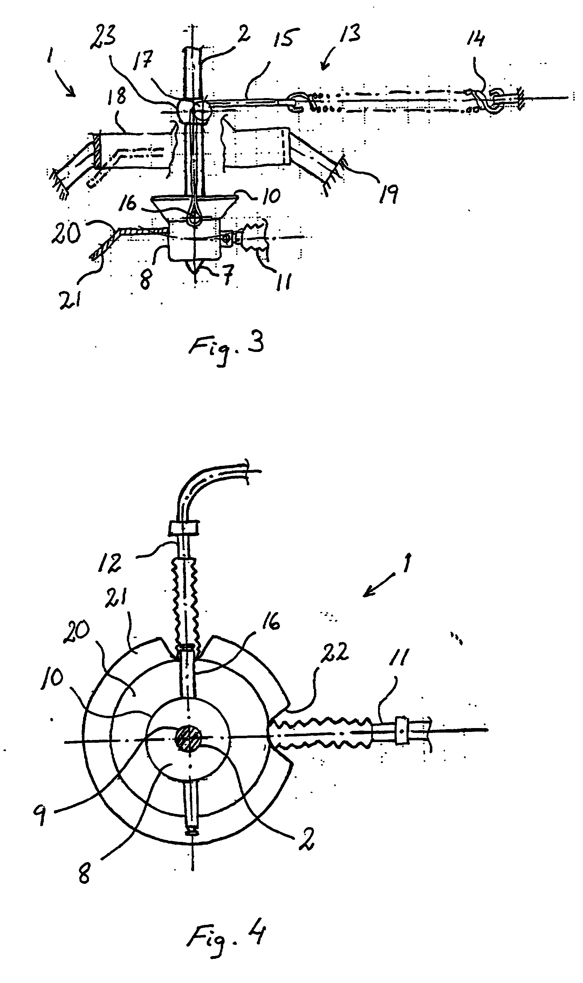

Figures 2 and 3 show the gear-change control system 1 in side sectional view relative to the vehicle's direction of travel. A spring arrangement 13 is connected to the disengagement device 8 in order to pre-tension it in relation to the gear lever 2 when the cab 4 is in the vehicle's drive position. The spring arrangement 13 comprises two tension springs 14, each of which is connected to the disengagement device 8 via a cable 15. Only one tension spring 14 and one cable 15 are shown in Fig. 3, while Fig. 1 shows both cables 15 of the spring arrangement 13. The cables 15 are attached to the disengagement device 8 via pins 16. Both cables 15 run over cable pulleys 17 which are mounted in a fixing ring 18. The fixing ring 18 is fixed to a frame structure 19 in the vehicle. The fixing ring 18 can alternatively be attached to the engine 5 or the gearbox 6.

On the disengagement device 8 is attached a fixing plate 20 which has a conical flange 21 designed to operate in conjunction with fixing ring 18, when the cab is tilted, as follows. During the tilting of the cab 4, the gear lever 2 will move upwards (see Fig. 3). The disengagement device 8 then moves upwards with the gear lever 2, due to the fact that the spring arrangement 13 pulls the disengagement device 8 upwards. When the fixing plate 20 on the disengagement device 8 reaches the fixing ring 18, as indicated by the dot/dash lines in Fig. 3, the gear lever 2 will be disengaged from the disengagement device 8. In this position, the disengagement device 8 is fixed against fixing ring 18 and remains in this fixed position until the cab 4 is lowered into the vehicle's drive position. The guide funnel 10 on the disengagement device 8 will guide the gear lever 2 into the bore 9 of the disengagement device 8, after which the gear lever 2 overcomes the spring force of the spring arrangement 13 and presses the disengagement device 8 down to the position shown by the continuous lines in Fig. 3. In this position, the disengagement device 8 "floats" relative to the vehicle. The disengagement device 8 will thus not be affected by the shaking and violent movements of the vehicle, but is dependent only on the movements of the gear lever 2.

Fig. 4 shows a sectional view of the gear-change control system 1 along line IV-IV in Fig. 2. The gear-change control system is shown here in plan view relative to the vehicle. This drawing clearly shows that a second wire 12 is connected to the disengagement device 8. The drawing also shows the pins to which the cables 15 of the spring arrangement 13 are connected. To prevent the wires 11 and 12 fouling with the fixing plate 20, recesses 22 are made in the conical flange 21 of fixing plate 20. As can be seen from Figs 1-3 above, the gear lever 2 is fitted by means of a ball joint 23 in the floor 3 of the cab 4.

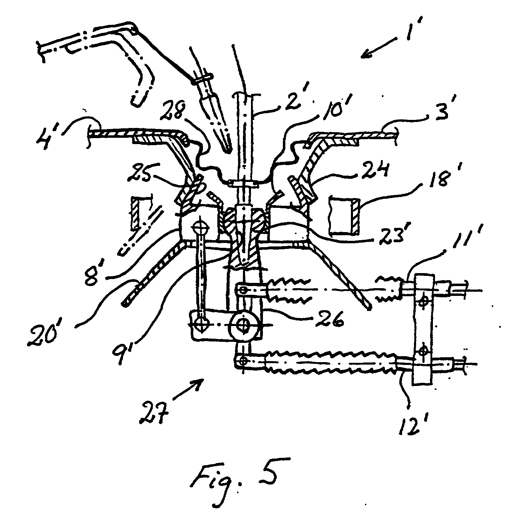

Fig. 5 shows a sectional side view of a gear-change control system 1' according to a second exemplary embodiment of the present invention. According to this exemplary embodiment, the ball joint 23' is fitted in the disengagement device 8' so that the the gear lever 2' is mounted in the disengagement device 8'. The ball joint 23' is provided with a conical bore 9' in which the gear lever 2' is inserted. Thus the ball joint 23' connects the gear lever 2' to the disengagement device 8'. A fixing cone 24' is arranged on the cab 4' and a fixing device 25 is arranged on the disengagement device 8'. Fixing cone 24 fixes the disengagement device 8' via the fixing device 25 in the drive position of the cab 4'. In this way the disengagement device 8' will follow the movements of the cab 4'.

The ball joint 23' is provided with an extension pin 26 in which a cable-fastening component 27 of known type is arranged. Two wires 11', 12' are coupled to the gear component 27. This means that any movements of the gear lever 2 are transmitted via ball joint 23' to the wires 11', 12', which in turn transmit movement to the gearbox (not shown in Fig. 5).

The disengagement device 8', according to Fig. 5, is fitted with a spring arrangement, fixing plate 20' and fixing ring 18' in the same way as the first exemplary embodiment. The fixing ring 18' can be connected to the frame structure 19, alternatively to the engine 5 or to the gearbox 6. However, the spring arrangement has been omitted in Fig. 5. The gear lever 2' is fixed in the cab 4' by springs and bands 28, so that it is pre-tensioned in the direction of the disengagement device 8'. The springs have been omitted in Fig. 5. When the cab 4' is tilted, the cab 4', the gear lever 2' and the disengagement device 8' will move upwards in Fig.5. When the fixing plate 20' of the disengagement device 8' reaches the fixing ring 18', the disengagement device 8' will remain in contact with the fixing ring 18', while the cab 4' will continue to move upwards. When the bands 28, connecting the gear lever 2' to the cab 4', are stretched, the gear lever 2' will disengage from the disengagement device 8' and thereby leave the bore 9' in the ball joint 23'.

## Claims

1. Gear-change control system for vehicles with tiltable driver's cab (4, 4'), comprising a gear lever (2, 2') fitted in the cab (4, 4'), which lever moves with the cab (4, 4') during tilting, and which, in the vehicle's drive position, is connected to a gearbox (6) fitted in the vehicle, whereby the gear lever (2, 2'), in the vehicle's drive position, is connected to a disengagement device (8, 8'), and whereby the gear lever (2, 2') is disengaged from the disengagement device (8, 8') when the cab (4, 4') is tilted, **characterized in that** said connection is done via at least one wire (11, 12; 11', 12'), that said wire (11, 12; 11', (11, 12; 11', 12') is connected to said disengagement device (8, 8'), and that the disengagement device (8, 8') is arranged to transmit movement from the gear lever (22') to the wire (11, 12; 11', 12').

2. Gear-change control system according to Claim 1, **characterized in that** a spring arrangement (13) is connected to the disengagement device (8, 8') in order to pre-tension the disengagement device (8, 8') in relation to the gear lever (2, 2') in the vehicle's drive position.

3. Gear-change control system according to Claim 2, **characterized in that** the spring arrangement (13) comprises at least one tension spring (14) which, via a cable (15), is connected to the disengagement device (8, 8'), which cable (15) runs over a cable pulley (17).

4. Gear-change control system according to any one of the preceding claims, **characterized in that** a fixing plate (20, 20') is fitted on the disengagement device (8, 8'), and **in that** a fixing ring (18, 18') is attached to a frame structure (19), engine (5) or gearbox (6) in the vehicle, which fixing ring (18, 18') fixes the disengagement device (8, 8') by means of the fixing plate (20, 20') during tilting of the cab (4, 4').

5. Gear-change control system according to any one of the preceding claims, **characterized in that** the disengagement device (8, 8') comprises a bore (9, 9') and a funnel-shaped guide (10, 10') arranged around the bore (9, 9'), which funnel guides the gear lever (2, 2') into the bore (9, 9') when the cab (4, 4') is lowered into the vehicle's drive position.

6. Gear-change control system according to any one of the preceding claims, **characterized in that** a ball joint (23') is fitted in the disengagement device (8'), which ball joint (23'), in the vehicle's drive position, disengageably connects the gear lever (2') to the disengagement device (8') so that the gear lever (2') is mounted in the disengagement device (8').

7. Gear-change control system according to Claim 6, **characterized in that** the wire (11', 12') is connected to the ball joint (23') via an extension pin (26).

8. Gear-change control system according to any one of the preceding claims, **characterized in that** a fixing cone (24) is fitted on the cab (4'), and **in that** a fixing device (25) is fitted on the disengagement device (8'), which fixing cone (24) fixes the disengagement device (8') via the fixing device (25) in the vehicle's drive position.

9. Gear-change control system according to any one of Claims 1-5, **characterized in that** the gear lever (2') is mounted in the cab (4) by means of a ball joint (23).

## Patentansprüche

1. Gangwechsel-Steuersystem für Fahrzeuge mit einer kippbaren Fahrerkabine (4, 4'), umfassend einen Ganghebel (2, 2'), der in die Kabine (4, 4') eingebaut ist, welcher Hebel sich mit der Kabine (4, 4') während des Kippens bewegt, und der in der Fahrposition des Fahrzeugs mit einem in das Fahrzeug eingebauten Getriebe (6) verbunden ist, wobei der Ganghebel (2, 2') in der Fahrposition des Fahrzeugs mit einer Lösevorrichtung (8, 8') verbunden ist, und wobei der Ganghebel (2, 2') von der Lösevorrichtung (8, 8') gelöst ist, wenn die Kabine (4, 4') gekippt ist, **dadurch gekennzeichnet, dass** die Verbindung über mindestens einen Draht (11, 12; 11', 12') ausgeführt ist, dass der Draht (11, 12; 11', 12') mit der Lösevorrichtung (8, 8') verbunden ist, und dass die Lösevorrichtung (8, 8') angeordnet ist, um eine Bewegung von dem Ganghebel (2, 2') auf den Draht (11, 12; 11', 12') zu übertragen.

2. Gangwechsel-Steuersystem nach Anspruch 1, **dadurch gekennzeichnet, dass** eine Federanordnung (13) mit der Lösevorrichtung (8, 8') verbunden ist, um die Lösevorrichtung (8, 8') in Bezug auf den Ganghebel (2, 2') in der Fahrposition des Fahrzeugs vorzuspannen.

3. Gangwechsel-Steuersystem nach Anspruch 2, **dadurch gekennzeichnet, dass** die Federanordnung (13) mindestens eine Spannfeder (14) aufweist, die über ein Kabel (15) mit der Lösevorrichtung (8, 8') verbunden ist, welches Kabel (15) über eine Kabelrolle (17) läuft.

4. Gangwechsel-Steuersystem nach einem der vorhergehenden Ansprüche, **dadurch gekennzeichnet, dass** eine Befestigungsplatte (20, 20') an der Lösevorrichtung (8, 8') angebracht ist, und dass ein Befestigungsring (18, 18') an einer Rahmenstruktur (19), einem Motor (5) oder einem Getriebe (6) in dem Fahrzeug angebracht ist, welcher Befestigungsring (18, 18') die Lösevorrichtung (8, 8') mittels der Befestigungsplatte(20, 20') während des Kippens der Kabine (4, 4') befestigt.

5. Gangwechsel-Steuersystem nach einem der vorhergehenden Ansprüche, **dadurch gekennzeichnet, dass** die Lösevorrichtung (8, 8') eine Bohrung (9, 9') und eine trichterförmige Führung (10, 10'), die um die Bohrung (9, 9') herum angeordnet ist, aufweist, welcher Trichter den Ganghebel (2, 2') in die Bohrung (9, 9') führt, wenn die Kabine (4, 4') in die Fahrposition des Fahrzeugs abgesenkt wird.

6. Gangwechsel-Steuersystem nach einem der vorhergehenden Ansprüche, **dadurch gekennzeichnet, dass** ein Kugelgelenk (23') in die Lösevorrichtung (8') eingebaut ist, welches Kugelgelenk (23') in der Fahrposition des Fahrzeugs den Ganghebel (2') lösbar mit der Lösevorrichtung (8') derart verbindet, dass der Ganghebel (2') in der Lösevorrichtung (8') montiert ist.

7. Gangwechsel-Steuersystem nach Anspruch 6, **dadurch gekennzeichnet, dass** der Draht (11', 12') mit dem Kugelgelenk (23') über einen Ansatzstift (26) verbunden ist.

8. Gangwechsel-Steuersystem nach einem der vorhergehenden Ansprüche, **dadurch gekennzeichnet, dass** ein Befestigungskonus (24) an der Kabine (4') angebracht ist, und dass eine Befestigungsvorrichtung (25) an der Lösevorrichtung (8') angebracht ist, welcher Befestigungskonus (24) die Lösevorrichtung (8') über die Befestigungsvorrichtung (25) in der Fahrposition des Fahrzeugs befestigt.

9. Gangwechsel-Steuersystem nach einem der Ansprüche 1 bis 5, **dadurch gekennzeichnet, dass** der Ganghebel (2') in der Kabine (4) mittels eines Kugelgelenks (23) eingebaut ist.

## Revendications

1. Un système de commande de changement de vitesse pour véhicules avec cabine de conduite basculable (4, 4'), comportant un levier de commande (2, 2') monté dans la cabine (4, 4'), lequel levier se déplace avec la cabine (4, 4') pendant le basculement, et lequel, dans la position d'entraînement du véhicule, est relié à une boîte de vitesses (6) montée dans le véhicule, dans lequel le levier de vitesse (2, 2'), dans la position d'entraînement du véhicule, est relié à un dispositif de débrayage (8, 8') et dans lequel le levier de vitesse (2, 2') est débrayé du dispositif de débrayage (8, 8') lorsque la cabine (4, 4') est basculée, **caractérisé en ce que** ladite connexion est effectuée via au moins un fil (11, 12; 11', 12'), **en ce que** ledit fil (11, 12; 11', 12') est relié au dit dispositif de débrayage (8, 8'), et **en ce que** le dispositif de débrayage (8, 8') est disposé pour transmettre un mouvement à partir du levier de vitesse (2, 2') vers le fil (11, 12; 11', 12').

2. Un système de commande de changement de vitesse selon la revendication 1, **caractérisé en ce qu'**un montage à ressort (13) est relié au dispositif de débrayage (8, 8') afin de précontraindre le dispositif de débrayage (8, 8') par rapport au levier de vitesse (2, 2') dans la position d'entraînement du véhicule.

3. Un système de commande de changement de vitesse selon la revendication 2, **caractérisé en ce qu'**un montage à ressort (13) comporte au moins un ressort de tension (14) qui, via un câble (15), est relié au dispositif de débrayage (8, 8'), lequel câble (15) passe autour d'une poulie à câble (17).

4. Un système de commande de changement de vitesse selon l'une quelconque des revendications précédentes, **caractérisé en ce qu'**une plaque de fixation (20, 20') est montée sur le dispositif de débrayage (8, 8'), et **en ce qu'**un anneau de fixation (18, 18') est attaché à une structure en châssis (19), un moteur (5) ou une boîte de vitesses (6) dans le véhicule, lequel anneau de fixation (18, 18') fixe le dispositif de débrayage (8, 8') au moyen de la plaque de fixation (20, 20') pendant le basculement de la cabine (4, 4').

5. Un système de commande de changement de vitesse selon l'une quelconque des revendications précédentes, **caractérisé en ce que** le dispositif de débrayage (8, 8') comporte un alésage (9, 9') et un guide en forme d'entonnoir (10, 10') aménagé autour de l'alésage (9, 9'), lequel guide entonnoir guide le levier de vitesse (2, 2') dans l'alésage (9, 9') lorsque la cabine (4, 4') est abaissée dans la position d'entraînement du véhicule.

6. Un système de commande de changement de vitesse selon l'une quelconque des revendications précédentes, **caractérisé en ce qu'**un joint à rotule (23') est monté dans le dispositif de débrayage (8'), lequel joint à rotule (23'), dans la position d'entraînement du véhicule, relie de manière débrayable le levier de vitesse (2') au dispositif de débrayage (8') afin que le levier de vitesse (2') soit monté dans le dispositif de débrayage (8').

7. Un système de commande de changement de vitesse selon la revendication 6, **caractérisé en ce que** le fil (11', 12') est relié au joint à rotule (23') via une tige d'extension (26).

8. Un système de commande de changement de vitesse selon l'une quelconque des revendications précédentes, **caractérisé en ce qu'**un cône de fixation (24) est monté sur la cabine (4'), et **en ce qu'**un dispositif de fixation (25) est monté sur le dispositif de débrayage (8'), lequel cône de fixation (24) fixe le dispositif de débrayage (8') via le dispositif de fixation (25) dans la position d'entraînement du véhicule.

9. Un système de commande de changement de vitesse selon l'une quelconque des revendications 1à 5, **caractérisé en ce que** le levier de vitesse (2') est monté dans la cabine (4) au moyen d'un joint à rotule (23).
